# EUROPEAN PATENT APPLICATION

(11) **EP 4 645 655 A1**
(43) Date of publication of application: **05.11.2025**
(21) Application number: 24766160.6
(22) Date of filing: 03.01.2024
(51) Int. Cl.: H02K 1/276

(54) **ROTOR, ELECTRIC MOTOR AND COMPRESSOR**

(30) Priority: 07.03.2023 CN 202310234331
(71) Applicant: Anhui Meizhi Compressor Co., Ltd., Hefei, Anhui Province 230088 (CN)
(72) Inventor: AI, Chengliu, Hefei, Anhui 230088 (CN); ZHANG, Wei, Hefei, Anhui 230088 (CN); HUANG, Gang, Hefei, Anhui 230088 (CN); NI, Fanglei, Hefei, Anhui 230088 (CN)
(74) Representative: RGTH
(86) International application number: PCT/CN2024/070382
(87) International publication number: WO 2024/183437

(57) **Abstract**

A rotor, a motor, and a compressor are disclosed. The rotor includes a rotor core (100), first permanent magnets (200), and second permanent magnets (300). The rotor core (100) has a plurality of first slots (130) and a plurality of second slots (140) arranged in an alternating manner along a circumferential direction of the rotor core. A number of the first permanent magnets (200) is consistent with a number of the first slots (130), and the first permanent magnets (200) are correspondingly installed in the first slots (130). A magnetization direction of the first permanent magnets (200) is oriented along a radial direction of the rotor core (100). The second permanent magnets (300) are provided in a number the same as that of the second slots (140) and are correspondingly installed in the second slots (140). A magnetization direction of the second permanent magnets (300) is oriented along a tangential direction of the rotor core (100). Projections of the second permanent magnets (300) and the adjacent first permanent magnets (200) on a projection plane perpendicular to the magnetization direction of the second permanent magnets (300) at least partially overlap with each other.

## Description

### CROSS-REFERENCE TO RELATED APPLICATION

This application claims the benefit of priority of Chinese Patent Application No. 202310234331.0 filed on March 7, 2023, entitled "ROTOR, MOTOR, AND COMPRESSOR", the disclosure of which is incorporated herein by reference in its entirety.

### TECHNICAL FIELD

The present disclosure relates to the technical field of compressors, and more particularly to a rotor, an electric motor, and a compressor.

### BACKGROUND

In related technology, ferrite permanent magnet motor rotors generally adopt a spoke structure, which allows the magnetic field strength in an air gap of an electric motor to reach a certain magnitude. To support permanent magnets, narrow rotor support beams are usually placed within the rotor, located in openings between adjacent permanent magnets. However, the support beams also provide a leakage magnetic circuit between adjacent poles of the permanent magnets, leading to a reduction in the magnetic field strength in the air gap and degrading the performance of the electric motor.

### SUMMARY

The present disclosure aims to solve at least one of the technical problems existing in the prior art. In view of this, the present disclosure provides a rotor, and an electric motor and compressor comprising the rotor.

According to an embodiment of the first aspect of the present disclosure, the rotor comprises a rotor core, a plurality of first permanent magnets, and a plurality of second permanent magnets. The rotor core has a plurality of first slots and a plurality of second slots, and the first slots and the second slots are arranged in an alternating manner along a circumferential direction of the rotor core. The first permanent magnets are provided in a number the same as that of the first slots and the first permanent magnets is installed in a corresponding first slot, and a magnetization direction of the first permanent magnets is oriented along a radial direction of the rotor core. The second permanent magnets are provided in a number the same as that of the second slots and the second permanent magnets is installed in a corresponding second slot, and a magnetization direction of the second permanent magnets is oriented along a tangential direction of the rotor core. A plane perpendicular to the magnetization direction of the second permanent magnets is defined as a projection plane. A projection of the second permanent magnets and a projection of the adjacent first permanent magnet on a projection plane at least partially overlap with each other.

According to some embodiments of the present disclosure, a cross-section of the first permanent magnets is rectangular. The second permanent magnets has a fitting surface at an end facing the first permanent magnet. The fitting surface is parallel to a side of the first permanent magnet facing the fitting surface.

According to some embodiments of the present disclosure, a remanence range of the first permanent magnets and the second permanent magnets is from 0.2 T to 0.7 T.

According to some embodiments of the present disclosure, a sum of cross-sectional areas of the plurality of first permanent magnets and the plurality of second permanent magnets is greater than or equal to 50% of a cross-sectional area of the rotor core.

According to some embodiments of the present disclosure, the rotor core comprises an inner ring portion and a plurality of outer core portions. The plurality of outer core portions are arranged at intervals along an outer periphery of the inner ring portion. The first slots are formed between the outer core portions and the inner ring portion. The second slots is formed between adjacent outer core portions.

According to some embodiments of the present disclosure, magnetic bridges are provided between the adjacent first slots and second slots. The outer core portions and the inner ring portion are connected through the magnetic bridges, or the magnetic bridges are in a disconnected configuration.

According to some embodiments of the present disclosure, the rotor further comprises connectors and end plates located at two ends of the rotor core. The outer core portions are provided with through-holes arranged axially along the rotor core, and the connectors pass through the through-holes to connect the end plates at the two ends.

According to some embodiments of the present disclosure, two ends of the outer core portions each ccomprises a protrusion extending toward the second slot. Two sides of the second permanent magnets each comprises a recess. The protrusion and the recess cooperate to limit the second permanent magnet radially along the rotor core.

According to some embodiments of the present disclosure, an end surface of the outer core portion away from the inner ring portion is an arc surface. A center of the arc surface is eccentrically arranged relative to a center of the inner ring portion.

According to an embodiment of the second aspect of the present disclosure, the electric motor comprises a stator and the rotor described in the first aspect, and the rotor is rotatably arranged within the stator.

According to an embodiment of the third aspect of the present disclosure, the compressor comprises the electric motor described in the second aspect.

Additional features and advantages of the present disclosure will be set forth in the subsequent description, and in part will become apparent from the description, or may be learned by practice of the present disclosure.

### BRIEF DESCRIPTION OF DRAWINGS

FIG. 1 is a schematic diagram of an overall structure of a rotor according to an embodiment of the present disclosure;
FIG. 2 is a schematic diagram of a cross-sectional structure of a rotor according to an embodiment of the present disclosure;
FIG. 3 is an enlarged view of A in FIG. 2;
FIG. 4 is a schematic diagram of an assembly structure of a rotor core and an end plate according to an embodiment of the present disclosure;
FIG. 5 is a schematic diagram of a cross-sectional structure of an electric motor according to an embodiment of the present disclosure;
FIG. 6 is a schematic diagram of the distribution of magnetic field lines in an electric motor according to an embodiment of the present disclosure;
FIG. 7 illustrates a comparison of the results of Fast Fourier Transform (FFT) of an air-gap magnetic field between the original scheme and the present disclosure; and
FIG. 8 illustrates the distribution of magnetic flux density for a series magnetic circuit of the original scheme and a series-parallel magnetic circuit of the present disclosure.

### List of reference signs:

Rotor core 100; Inner ring portion 110; Shaft hole 111; Outer core portion 120; Through-hole 121; Protrusion 122; First slot 130; Second slot 140; Magnetic bridge 150;
First permanent magnet 200;
Second permanent magnet 300; Fitting surface 310; Recess 320;
End plate 400; Connecting hole 410;
Rotor 1000;
Stator 2000; and
Electric motor 3000.

### DETAILED DESCRIPTION

Embodiments of the present disclosure will be discussed in detail below. Examples of the embodiments are illustrated in the accompanying drawings, where the same or like reference numerals throughout the figures indicates the same or like elements having the same or like functions. The embodiments described below with reference to the accompanying drawings are exemplary and are intended only to explain the present disclosure instead of being construed as limiting the present disclosure.

In the description of the present disclosure, it should be understood that orientation or positional relationships indicated by terms such as "circumferential direction", "axial direction", "radial direction", "tangential direction", and "width" are based on the orientation or positional relationships shown in the accompanying drawings, and are to facilitate the description of the present disclosure and simplify the description only, rather than indicating or implying that the device or element referred to must have a specific orientation or be constructed and operated in a specific orientation, and therefore cannot be construed as limiting the present disclosure.

In the description of the present disclosure, the usage of terms such as "first" and "second" is solely used for the purpose of distinguishing technical features and should not be construed as indicating or implying relative importance or implicitly indicating the number of indicated technical features or implicitly indicating the sequence of indicated technical features.

In the description of the present disclosure, it is to be noted that the terms such as "arrange", "install", and "connect" should be construed in a broad sense, and those skilled in the art can determine the specific meanings of the above terms in the present disclosure in a rational way in conjunction with the specific contents of the technical schemes.

The technical schemes in the embodiments of the present disclosure are clearly and comprehensively described in the following with reference to the drawings. It is obvious that the embodiments described below are only some of the embodiments of the present disclosure and are not all the embodiments.

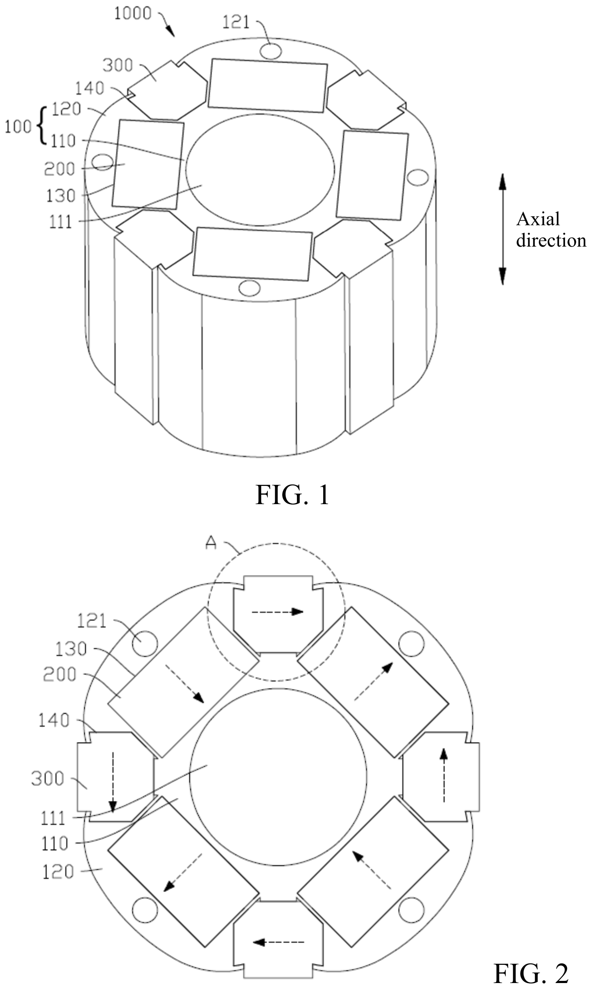

Referring to FIG. 1, a rotor 1000 provided by the embodiment of the present disclosure comprises a rotor core 100, a plurality of first permanent magnets 200, and a plurality of second permanent magnets 300. The rotor core 100 has a shaft hole 111 for installing a rotating shaft. The rotor core 100 also has a plurality of first slots 130 and a plurality of second slots 140, with the first slots 130 and the second slots 140 arranged in an alternating manner along a circumferential direction of the rotor core 100. The number of the first permanent magnets 200 is the same as that of the first slots 130, and the number of the second permanent magnets 300 is the same as that of the second slots 140. In the embodiment shown in FIG. 1, the number of the first permanent magnets 200 and the number of the second permanent magnets 300 are both four, and the number of the first slots 130 and the number of the second slots 140 are both four. The first permanent magnets 200 are matched with the first slots 130, and the four first permanent magnets 200 are correspondingly installed in the four first slots 130. The second permanent magnets 300 are matched with the second slots 140, and the four second permanent magnets 300 are correspondingly installed in the four second slots 140.

For example, the first permanent magnets 200 and the second permanent magnets 300 are distributed in an alternating manner along the circumferential direction of the rotor core 100. One second permanent magnet 300 is positioned between any two adjacent first permanent magnets 200, and the two first permanent magnets 200 symmetrically are arranged with respect to the second permanent magnet 300 therebetween. One first permanent magnet 200 is arranged between any two adjacent second permanent magnets 300, and the two second permanent magnets 300 are symmetrically arranged with respect to the first permanent magnet 200 therebetween. Then, the rotor core 100 has two groups of permanent magnets, with the four first permanent magnets 200 regarded as a first magnetic group and the four second permanent magnets 300 regarded as a second magnetic group. It should be noted that both the first permanent magnets 200 and the second permanent magnets 300 extend through the rotor core 100 in an axial direction of the rotor core 100.

Referring to FIG. 2, it can be understood that a magnetization direction of the first permanent magnets 200 is oriented along a radial direction of the rotor core 100, while a magnetization direction of the second permanent magnets 300 is oriented along a tangential direction of the rotor core 100, i.e., in the direction of the tangent to the rotor core 100. For example, the directions indicated by the arrows in FIG. 2 represent the magnetization directions of the first permanent magnets 200 and the second permanent magnets 300, and the magnetization directions of adjacent first permanent magnets 200 are opposite to each other. Similarly, the magnetization directions of adjacent second permanent magnets 300 being opposite. That is, in two adjacent second permanent magnets 300, the magnetization direction of one is along the clockwise tangential direction, while the other is along the counterclockwise tangential direction. In two adjacent first permanent magnets 200, if one has its magnetization direction radially outward, then the adjacent first permanent magnet 200 has its magnetization direction radially inward. This configuration creates two groups of permanent magnets with different magnetic field directions on the rotor core 100, which can reduce the unipolar leakage flux of each permanent magnet.

It should be noted that the first permanent magnets 200 and the second permanent magnets 300 used in the embodiments of the present disclosure are both ferrites, which have strong demagnetization resistance and cost advantages, and are magnetized to create permanent magnets. Other feebly magnetic materials may also be usable.

In related technology, rotors made of ferrites typically adopt a spoke structure to achieve a certain magnitude of magnetic field strength in an air gap of an electric motor for adequate electric motor power output. To support permanent magnets and ensure the physical strength of the integrated rotor core, narrow support beams are generally placed between the permanent magnets on the inner side of the rotor. The support beams located between a plurality of openings between the poles of the permanent magnets in order to reduce leakage flux, with. Although the support beams enhance the physical strength of the rotor core, the magnetic field lines generated by the permanent magnets can leak through the support beams, preventing some of the magnetic field lines from reaching the stator, which results in a reduced utilization of the rotor magnetic field and a certain decrease in the air gap magnetic field strength.

Referring to FIG. 2, it can be understood that in the embodiments of the present disclosure, the rotor core 100 limits the first permanent magnets 200 and the second permanent magnets 300 through the first slots 130 and the second slots 140 respectively, thereby eliminating a requirement for a support beam structure to support the two groups of permanent magnets, which effectively reduces leakage flux.

Continuing to refer to FIG. 2, in the embodiments of the present disclosure, projections of the second permanent magnets 300 and the adjacent first permanent magnets 200 on a projection plane perpendicular to the magnetization direction of the second permanent magnets 300 partially overlap with each other. The adjacent first permanent magnet 200 and second permanent magnet 300 are arranged in close proximity. As illustrated in an example of the first permanent magnet 200 and the second permanent magnet 300 in the upper side of FIG. 2, the magnetization direction of the second permanent magnet 300 is along the clockwise tangential direction, which aligns with the horizontal direction at this position. Therefore, the projection plane is a plane perpendicular to the horizontal direction and parallel to the axis of the rotor core 100, so that the projections of the first permanent magnet 200 and the second permanent magnet 300 on the projection plane partially overlap with each other.

In some embodiments, by adjusting the sizes of the first permanent magnets 200 and the second permanent magnets 300, it is also possible to make the projections of the adjacent first permanent magnet 200 and second permanent magnet 300 fully overlap with each other on the projection plane.

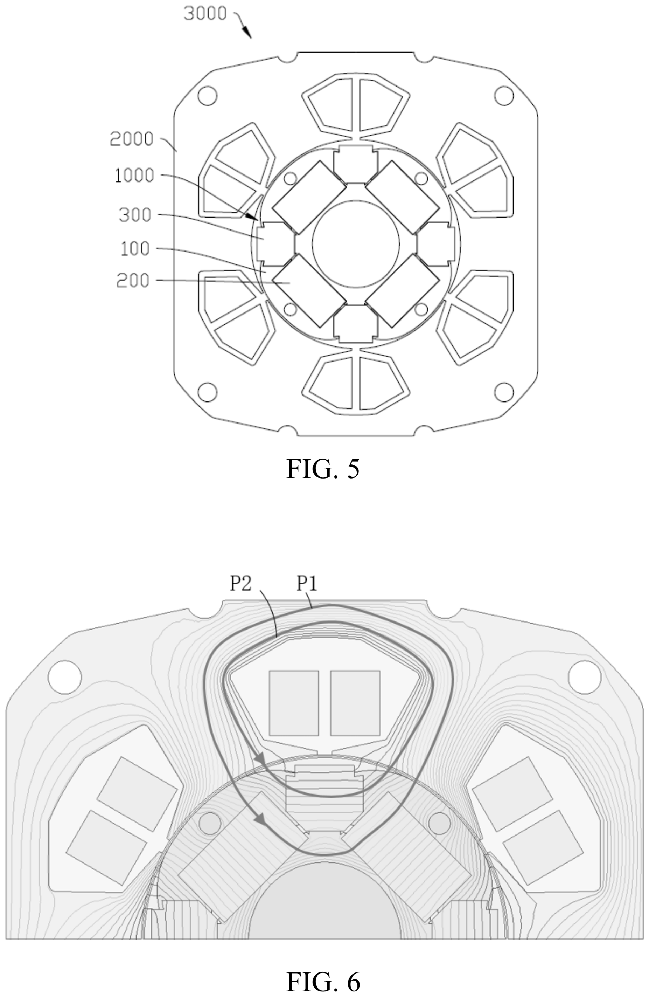

It can be understood that the rotor 1000 is applied to an electric motor 3000, and by optimizing the structures of the first permanent magnets 200 and the second permanent magnets 300, and using the plane perpendicular to the magnetization direction of the second permanent magnets 300 as the projection plane, the projections of the adjacent first permanent magnet 200 and second permanent magnet 300 can partially or fully overlap with each other on the projection plane. Referring to FIG. 6, it can be understood that the first permanent magnets 200 are magnetized in the radial direction of the rotor core 100, the second permanent magnets 300 are magnetized in the tangential direction of the rotor core 100, the magnetic field lines of the first permanent magnets 200 extend along the radial direction of the rotor core 100, and the magnetization directions of adjacent first permanent magnets 200 are opposite. Therefore, a magnetic field between the adjacent first permanent magnets 200 forms a series magnetic circuit. In FIG. 6, P1 represents one of the magnetic field lines in the series magnetic circuit. Meanwhile, the magnetic field lines of the second permanent magnets 300 bend towards a stator 2000 at two ends of the second permanent magnets 300, so that the bending direction approaches the radial direction of the rotor core 100. This configuration allows a parallel magnetic circuit to be formed by the magnetic field generated by the first permanent magnets 200 and the magnetic field generated by the second permanent magnets 300. In FIG. 6, P1 and P2 represent two of the magnetic field lines in the parallel magnetic circuit. By combining series and parallel magnetic circuit structures, leakage flux between adjacent poles is effectively reduced, thereby increasing magnetic flux density. This enhancement contributes to a strong air gap flux density between the stator 2000 and the rotor 1000 of the electric motor 3000, and boosts the amplitude of the air gap magnetic field. Under the same load, this results in lower current, reduced line losses, suppressed harmonic fields, and decreased iron losses, thereby improving the performance of the electric motor 3000.

Referring to FIGS. 1 and 2, it should be noted that in the embodiments, the cross-section of the first permanent magnets 200 is rectangular, while the cross-section of the second permanent magnets 300 is non-rectangular and may be a polygonal shape. By cooperation between the rectangular first permanent magnets 200 with the non-rectangular second permanent magnets 300, a more compact fit is achieved between the first permanent magnets 200 and the second permanent magnets 300. Given the same dimension for the rotor core 100, this configuration effectively increases the sizes of both groups of permanent magnets, resulting in a stronger fundamental air gap magnetic field. This is merely an example. The number of the first permanent magnets 200 and the number of the second permanent magnets 300 are not limited to four, but may also be six, eight, or more, without specific limitations.

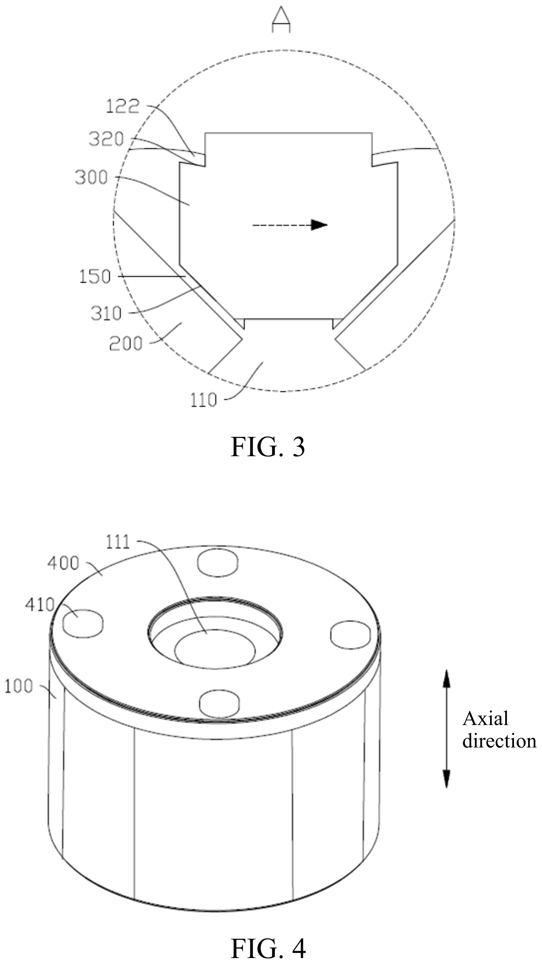

Referring to FIGS. 2 and 3, it can be understood that a side of the first permanent magnet 200 that extends in a width direction faces the second permanent magnet 300, i.e., a short edge of the cross-section of the first permanent magnet 200 is close to the second permanent magnet 300. An end of the second permanent magnet 300 facing the first permanent magnet 200 is equipped with a fitting surface 310, which is parallel to a side of the first permanent magnet 200 facing the fitting surface, thereby making the fit between the first permanent magnet 200 and the second permanent magnet 300 more reasonable.

For example, corners on both sides of the second permanent magnet 300 are modified through cutting or other methods to form the fitting surfaces 310, so that one end of the second permanent magnet 300 a trapezoidal shape. In contrast to the arrangement where the corners are positioned opposite to the first permanent magnet 200, in the embodiments of the present disclosure, the second permanent magnet 300 fits with the side of the first permanent magnet 200 through the fitting surface 310. This arrangement not only allows for an increase in the dimensions of both the first permanent magnet 200 and the second permanent magnet 300 within a limited space, but also results in a more uniform distribution of magnetic field lines between the first permanent magnet 200 and the second permanent magnet 300, thereby enhancing the effectiveness of the parallel magnetic circuit and strengthening the fundamental air gap magnetic field.

Of course, this is merely an example. The second permanent magnet 300 is not limited to the shape shown in FIG. 2. For example, the cross-section of the second permanent magnet 300 may be approximately triangular, so that the side of the second permanent magnet 300 is opposite to the side of the first permanent magnet 200 for a more compact fit.

It should be noted that the magnetic induction intensity exhibited by the first permanent magnet 200 and the second permanent magnet 300 after magnetization is referred to as remanence, representing the maximum magnetic flux value that the magnets can provide. In the embodiments of the present disclosure, a remanence range for the first permanent magnets 200 and the second permanent magnets 300 is from 0.2 T (Tesla) to 0.7 T. Under these remanence values, a stable series magnetic circuit can be formed between adjacent first permanent magnets 200, and a stable parallel magnetic circuit is established between the first permanent magnets 200 and the second permanent magnets 300. This arrangement achieves the magnetic field line distribution effect shown in FIG. 6, thereby effectively enhancing the fundamental air gap magnetic field. As a result, under the same load, the current is reduced, line losses are minimized, harmonic fields are suppressed, and iron losses are decreased, thereby improving the efficiency of the electric motor 3000.

It can be understood that the remanence of the first permanent magnet 200 and the second permanent magnet 300 may be 0.2 T, 0.4 T, 0.5 T, 0.7 T, etc. The remanence values for both may be the same or different, with no specific limitations imposed.

Referring to FIG. 2, in the embodiments of the present disclosure, a combined cross-sectional area of the first magnetic group and the second magnetic group is greater than or equal to 50% of a cross-sectional area of the rotor core 100. Here, the cross-sectional area of the first magnetic group is a sum of the cross-sectional areas of all the first permanent magnets 200, while the cross-sectional area of the second magnetic group is a sum of the cross-sectional areas of all the second permanent magnets 300. For example, the combined cross-sectional area of the two groups of permanent magnets may account for 50%, 60%, or more than 70% of the cross-sectional area of the rotor core 100. Under these conditions, it ensures a more reasonable distribution of the magnetic circuit topology of the first permanent magnets 200 and the second permanent magnets 300, thereby effectively increasing the magnetic flux of the rotor 1000, reducing leakage flux, and enhancing the air gap magnetic field.

Referring to FIGS. 1 and 2, it can be understood that the rotor core 100 comprises an inner ring portion 110 and a plurality of outer core portions 120, and the plurality of outer core portions 120 are arranged at intervals along an outer periphery of the inner ring portion 110. In the embodiments, four outer core portions 120 are provided. The first slots 130 are formed between the outer core portions 120 and the inner ring portion 110, and the second slots 140 are formed between adjacent outer core portions 120. The first slots 130 and the second slots 140 arranged at intervals. The first permanent magnets 200 are matched with the first slots 130, so that an outer peripheral wall of the first permanent magnet 200 tightly adheres to an inner wall of the first slot 130. Similarly, the second permanent magnets 300 are matched with the second slots 140, so that an outer peripheral wall of the second permanent magnet 300 fits closely against an inner wall of the second slot 140. This design prevents gaps from forming within the first slots 130 and the second slots 140, thereby reducing leakage flux and enhancing the air gap magnetic field.

It should be noted that in the embodiments of the present disclosure, the inner ring portion 110 has a shaft hole 111. The inner ring portion 110 and the outer core portion 120 are composed of stacked laminations, which may be made from silicon steel sheets or other sheet metals with good magnetic conductivity, offering the advantage of low cost.

Referring to FIGS. 2 and 3, in some embodiments, magnetic bridges 150 are arranged between the inner ring portion 110 and the outer core portions 120, and the magnetic bridges 150 are situated between the adjacent first slots 130 and second slots 140. The magnetic bridges 150 connect the outer core portions 120 and the inner ring portion 110 to form an integral structure for the rotor core 100, thereby enhancing the strength of the rotor core 100.

In some embodiments, the magnetic bridges 150 may be in a disconnected configuration, i.e., the outer core portions 120 and the inner ring portion 110 are not connected. The open magnetic bridges 150 can reduce inter-pole magnetic leakage, thereby enhancing the air gap magnetic field.

Referring to FIGS. 2 and 3, two ends of an outer peripheral edge of the outer core portion 120 have a plurality of protrusions 122 that extend towards the second slots 140, i.e., the protrusions 122 protrude beyond the ends of the outer core portion 120 along a circumferential direction of the rotor core 100. The second permanent magnet 300 has a plurality of recesses 320 on two sides. When the second permanent magnets 300 are inserted into the second slots 140, the protrusions 122 contact with the recesses 320. This cooperation between the protrusions 122 and the recesses 320 effectively limits the position of the second permanent magnets 300 along a radial direction of the rotor core 100, resulting in a stable and reliable structure. Because the second permanent magnet 300 is non-rectangular, the ends of the second permanent magnet 300 protrude beyond the outer peripheral edge of the rotor core 100 to create a reverse salient pole for the rotor 1000 once the second permanent magnet 300 is assembled. This results in the d-axis inductance being greater than the q-axis inductance, thereby reducing high-frequency weak magnetic currents and lowering line losses.

Referring to FIG. 4, in some embodiments, the rotor 1000 also comprises a plurality of connectors and two end plates 400 positioned at two ends of the rotor core 100 along its axial direction. Each outer core portion 120 has a through-hole arranged axially along the rotor core 100, and the connectors pass through the through-holes 121 to connect the end plates 400 at both ends. The through-hole 121 is located at a symmetric centerline of the outer core portion 120. The connectors may be bolts, rivets or other structures. The end plates 400 are equipped with connecting holes 410 corresponding to the through-holes 121. For example, the connector is a bolt and the connecting hole 410 is a threaded hole. The bolt passes through the through-hole 121, and two ends of the bolt connect to the threaded holes in the end plates 400 to securely fasten the two end plates 400 and clamp the rotor core 100, thereby fixing the inner ring portion 110 to the outer core portions 120 and enhancing the overall strength of the rotor core 100.

It should be noted that when the magnetic bridges 150 are in the disconnected configuration, the outer core portions 120 and the inner ring portion 110 are not connected. By adding the end plates 400 and the connectors as described in the above embodiment to the rotor 1000, the outer core portions 120 and the inner ring portion 110 can be properly positioned, resulting in higher manufacturability and effectively enhancing the overall strength of the rotor 1000.

Referring to FIG. 3, it can be understood that an end face of the outer core portion 120 away from the inner ring portion 110 is an arc surface, with a center of the arc surface being eccentrically arranged relative to a center of the inner ring portion 110, i.e., the center of the arc surface at the edge of the rotor core 100 is offset from the center of the rotor core 100. By adjusting the eccentricity of the arc surface, it is possible to reduce the harmonics of the air gap flux density, such as the 5th, 7th, 13th, and 15th harmonics, thereby lowering the harmonic content.

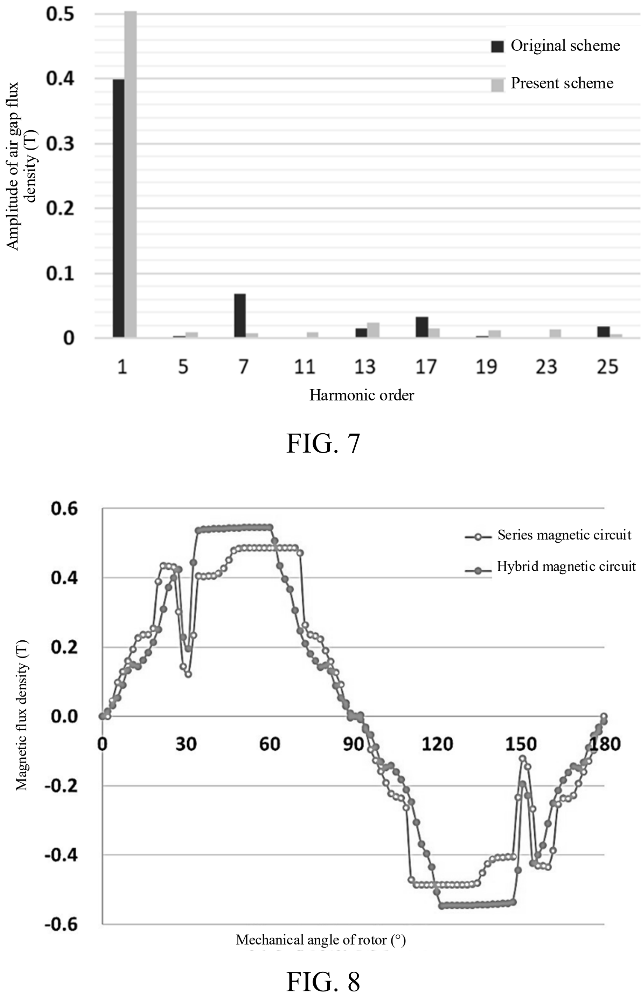

Referring to FIGS. 7 and 8, it can be understood that FIG. 7 illustrates a comparison of the results of FFT of an air-gap magnetic field between the original scheme and the present disclosure. The original scheme utilizes a spoke structure for the rotor 1000. The comparison reveals that a fundamental amplitude has increased by approximately 25% as compared to the original scheme, thereby effectively reducing the operating current of the electric motor 3000 or enhancing the output power of the electric motor 3000, and increasing its power density. Meanwhile, the FFT results indicate a significant reduction in the amplitudes of the 7th, 17th, and 25th harmonics of the air gap flux density. Further, in the embodiments of the present disclosure, the adoption of the above structure enhances the fundamental air gap magnetic field of the electric motor 3000, allowing for a proper increase in a gap between the stator 2000 and the rotor 1000 of the electric motor 3000 without increasing the remanence of the permanent magnets, thereby improving the reliability of the electric motor 3000.

In FIG. 8, the series magnetic circuit represents the magnetic circuit formed by the rotor 1000 in the original scheme, while the hybrid magnetic circuit represents the combined series and parallel magnetic circuit in the embodiments of the present disclosure. It can be understood that at a given moment, the distribution of the air gap magnetic field between the stator 2000 and the rotor 1000 is non-ideally sinusoidal, and Fourier decomposition can yield the various harmonics. When the air gap flux density is enhanced, the current of the electric motor 3000 under the same load is lower, resulting in reduced line losses and lower thermal density, allowing the electric motor 3000 to be designed smaller for the same temperature rise.

According to the rotor in the embodiments of the present disclosure, the plurality of first permanent magnets and the plurality of second permanent magnets are arranged in an alternating manner along the circumferential direction of the rotor core, and the first permanent magnets and the second permanent magnets are magnetized separately. The magnetization direction of the first permanent magnets is along the radial direction of the rotor core, and the magnetization direction of the second permanent magnets is along the tangential direction of the rotor core. As such, two groups of permanent magnets with different magnetic field directions are formed on the rotor core. A plane perpendicular to the magnetization direction of the second permanent magnets is defined as a projection plane, and the projections of the second permanent magnets and the adjacent first permanent magnets on the projection plane partially or fully overlap with each other. This arrangement allows for the formation of a series magnetic circuit between adjacent first permanent magnets, and a parallel magnetic circuit between the first permanent magnets and the second permanent magnets to reduce leakage flux between adjacent poles. This results in a higher magnetic flux density, which helps enhance the fundamental air gap magnetic field of the electric motor, leading to lower current under the same load, reduced line losses, suppressed harmonic fields, decreased iron losses, and improved efficiency of the electric motor.

Referring to FIG. 5, the electric motor 3000 provided by an embodiment of the present disclosure comprises a stator 2000 and the rotor 1000 as described in the above embodiment, and the rotor 1000 is rotatably arranged within the stator 2000. The rotor core 100 has two groups of permanent magnets. The magnetization direction of the first permanent magnets 200 is along the radial direction of the rotor core 100, while the magnetization direction of the second permanent magnets 300 is along the tangential direction of the rotor core 100. The plane perpendicular to the magnetization direction of the second permanent magnets 300 is defined as the projection plane, and the projections of the second permanent magnets 300 and the adjacent first permanent magnets 200 partially or fully overlap with each other on the projection plane. Referring to FIG. 6, under these conditions, a series magnetic circuit is formed between adjacent first permanent magnets 200, while a parallel magnetic circuit is formed between the magnetic field generated by the first permanent magnets 200 and the magnetic field generated by the second permanent magnets 300. This combined series and parallel magnetic circuit structure effectively reduces leakage magnetic flux between adjacent poles, increases magnetic flux density, and enhances the air gap flux density between the stator 2000 and the rotor 1000 of the electric motor 3000. This leads to a higher amplitude of the air gap magnetic field, lower current under the same load, reduced line losses, suppressed harmonic magnetic fields, decreased iron losses, and improved efficiency of the electric motor 3000.

It can be understood that for the rotor 1000 and the stator 2000 as described in the above embodiment, an inner diameter of the stator 2000 can be appropriately increased, thereby widening the gap between the stator 2000 and the rotor 1000. This configuration minimizes interference between the stator 2000 and the rotor 1000 of the electric motor 3000, thereby reducing the risk of interference between the stator 2000 and the rotor 1000 and enhancing the reliability of the electric motor 3000.

According to the electric motor in the embodiments of the present disclosure, the rotor as described in the above embodiment has two groups of permanent magnets. This arrangement allows for the formation of a series magnetic circuit between adjacent first permanent magnets and a parallel magnetic circuit between the first permanent magnets and the second permanent magnets, thereby reducing leakage flux between adjacent poles. This results in a higher magnetic flux density, which helps enhance the fundamental air gap magnetic field of the electric motor, leading to lower current under the same load, reduced line losses, suppressed harmonic fields, decreased iron losses, and improved efficiency of the electric motor. Further, the inner diameter of the stator of the electric motor can be appropriately increased, thereby widening the gap between the stator and the rotor. This configuration minimizes the interference between the stator and the rotor, thereby reducing the risk of interference and enhancing the reliability of the electric motor.

An embodiment of the present disclosure further provides a compressor applicable to refrigeration equipment such as air conditioners and refrigerators. According to the compressor in the embodiments of the present disclosure, the electric motor as described in the above embodiment is adopted. Because the rotor of the electric motor has two groups of permanent magnets, it allows for the formation of a series magnetic circuit between adjacent first permanent magnets and a parallel magnetic circuit between the first permanent magnets and the second permanent magnets, thereby reducing leakage flux between adjacent poles. This results in a higher magnetic flux density, which helps enhance the fundamental air gap magnetic field of the electric motor, leading to lower current under the same load, reduced line losses, suppressed harmonic fields, decreased iron losses, and improved energy efficiency of the compressor. Further, the inner diameter of the stator of the electric motor can be appropriately increased, thereby widening the gap between the stator and the rotor. This configuration minimizes the interference between the stator and the rotor of the electric motor, reducing the risk of interference and enhancing the overall reliability of the compressor.

Although some embodiments of the present disclosure have been described in detail above with reference to the accompanying drawings, the present disclosure is not limited to the above embodiments, and various changes may be made within the knowledge of those having ordinary skill in the art without departing from the principle of the present disclosure.

## Claims

1. A rotor, comprising:
a rotor core, comprising a plurality of first slots and a plurality of second slots, the plurality of first slots and the plurality of second slots being arranged in an alternating manner along a circumferential direction of the rotor core;
a plurality of first permanent magnets, wherein a number of the plurality of first permanent magnets is consistent with a number of the plurality of first slots, and the plurality of first permanent magnets is installed in a corresponding first slot, wherein a magnetization direction of the first permanent magnets is oriented along a radial direction of the rotor core; and
a plurality of second permanent magnets, wherein a number of the plurality of second permanent magnets is consistent with a number of the plurality of second slots, and the plurality of second permanent magnets is installed in a corresponding second slot, wherein a magnetization direction of the plurality of second permanent magnets is oriented along a tangential direction of the rotor core; and wherein a plane perpendicular to the magnetization direction of the plurality of the second permanent magnets (300) is defined as a projection plane, and a projection of the plurality of second permanent magnets and a projection of an adjacent first permanent magnet on the projection plane at least partially overlap with each other.

2. The rotor of claim 1, wherein a cross-section of the plurality of first permanent magnets is rectangular, the plurality of second permanent magnets has a fitting surface at an end facing the first permanent magnet, and the fitting surface is parallel to a side of the first permanent magnet facing the fitting surface.

3. The rotor of claim 1 or 2, wherein a remanence range of the plurality of first permanent magnets and the plurality of second permanent magnets is from 0.2 T to 0.7 T.

4. The rotor of any one of claims 1 to 3, wherein a sum of cross-sectional areas of the plurality of first permanent magnets and the plurality of second permanent magnets is greater than or equal to 50% of a cross-sectional area of the rotor core.

5. The rotor of any one of claims 1 to 4, wherein the rotor core comprises an inner ring portion and a plurality of outer core portions arranged at an interval along an outer periphery of the inner ring portion, the plurality of first slots are formed between the plurality of outer core portions and the inner ring portion, and the plurality of second slots is formed between adjacent outer core portions.

6. The rotor of claim 5, wherein magnetic bridges are formed between an adjacent first slot and an adjacent second slot, and the plurality of outer core portions and the inner ring portion are connected through the plurality of magnetic bridges, or the plurality of magnetic bridges are in a disconnected configuration.

7. The rotor of claim 5 or claim 6, wherein the rotor further comprises connectors and end plates located at two ends of the rotor core, the plurality of outer core portions comprise through-holes arranged axially along the rotor core, and the plurality of connectors pass through the plurality of through-holes to connect the plurality of end plates at the two ends.

8. The rotor of any one of claims 5 to 7, wherein two ends of the plurality of outer core portions each comprises a protrusion extending toward the second slot, two sides of the plurality of second permanent magnets each comprises a recess, and the protrusion and the recess cooperate to limit the second permanent magnet radially along the rotor core.

9. The rotor of any one of claims 5 to 8, wherein an end surface of the plurality of outer core portions away from the inner ring portion is an arc surface, and a center of the arc surface is eccentrically arranged relative to a center of the inner ring portion.

10. An electric motor, comprising a stator and a rotor of any one of claims 1 to 9, wherein the rotor is rotatably arranged within the stator.

11. A compressor, comprising an electric motor of claim 10.
